# EUROPEAN PATENT APPLICATION

(11) **EP 3 174 215 A1**
(43) Date of publication of application: **31.05.2017**
(21) Application number: 15825483.9
(22) Date of filing: 24.07.2015
(51) Int. Cl.: H04B 5/00, G06K 7/00

(54) **DOUBLE-FREQUENCY MULTI-PROTOCOL MULTIFUNCTIONAL NEAR FIELD COMMUNICATION INTEGRATED SYSTEM AND APPLICATION METHOD**

(30) Priority: 24.07.2014 CN 201410353355
(71) Applicant: Shanghai Freevision Technologies Co. Ltd., Shanghai 201114 (CN)
(72) Inventor: WANG, Yongchun, Shanghai 201114 (CN); ZHAO, Zhenhe, Shanghai 201114 (CN); YE, Shaoming, Shanghai 201114 (CN)
(74) Representative: Holzwarth-Rochford, Andreas
(86) International application number: PCT/CN2015/085007
(87) International publication number: WO 2016/011971

(57) **Abstract**

The present invention discloses a type of integrated system and application method for dual-frequency multi-protocol multifunctional near field communication. A first inductive antenna is connected to a high-frequency NFC card-reader chip; the high-frequency NFC card-reader chip reads information of a high-frequency NFC tag, and the information of the high-frequency NFC tag is transmitted to a smart terminal by an ARM main-control chip through a Bluetooth module; the information of the high-frequency NFC tag at the smart terminal is transmitted to the ARM main-control chip through the Bluetooth module, is also transmitted to a dual-interface smart-card chip, and by matching with a second inductive antenna, is emulated into a high-frequency NFC tag; information of a low-frequency tag is read by a low-frequency card-reader chip and a third inductive antenna, and is transmitted to the smart terminal by the ARM main-control chip through the Bluetooth module; a low-frequency card-emulation control module, the ARM main-control chip and the third inductive antenna achieve functions of low-frequency inductive cards, deploying low-frequency inductive cards under any formats and protocols. The integrated system and application method covers high/low-frequency RFID applications, extends the NFC application functions, facilitates switching between the card-reader mode and the card mode, and improves quality of experience with NFC application functions.

## Description

### Technical Field

The present invention relates to a type of integrated system and application method for dual-frequency multi-protocol multifunctional near field communication.

### Background Technology

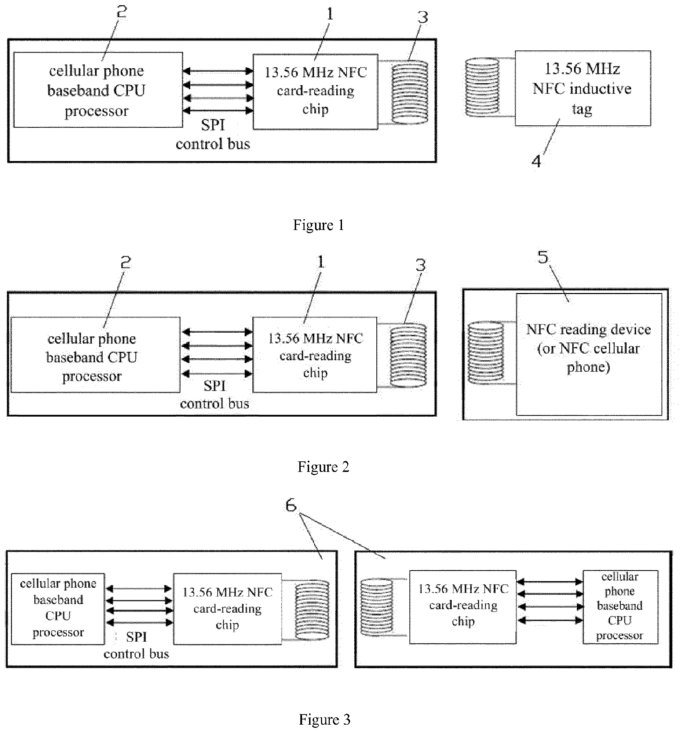

Near Field Communication, also known as NFC (Near Field Communication), is a new type of short-range induction communication technology derived from wireless Radio-Frequency Identification (RFID) technology. Current conventional NFC technology employs 13.56 MHz (high-frequency) resonant frequency, and the communication protocols conform to the four standards ISO14443A/ISO14443B/ISO15693/SonyFelica. In an NFC-enabled cellular phone, an NFC card-reading chip and an inductive antenna are installed to primarily achieve the following application functions: As shown in Figure 1, a cellular phone with an installed high-frequency NFC card-reading chip 1 is connected to a cellular phone baseband CPU processor 2 through an SPI bus. An inductive antenna 3 is connected to the NFC card-reading chip 1, and a user is able to immediately use short-range induction of the cellular phone to read information of a high-frequency NFC tag 4. As shown in Figure 2, the high-frequency NFC card-reading chip 1 installed in the cellular phone has a card emulation function, namely enabling the NFC cellular phone to emulate an inductive card or an inductive tag, so that readings can be made by any NFC reading device 5 (including an NFC cellular phone). As shown in Figure 3, peer-to-peer communications can be directly facilitated between two NFC devices (including NFC cellular phones), in order to exchange information and data.

All NFC cellular phones, NFC protective cases and NFC audio headset jacks on the current market use standard NFC specifications, namely the resonant frequency being a high-frequency, and communication protocols conform to ISO14443AB, ISO15693 or SonyFelica standards. However, in the current entire global RFID market, in addition to widespread high-frequency RFID, 125 KHz / 134.2 KHz (low-frequency) frequency range RFID applications are also quite widespread, especially in the fields of access control, attendance check, animal identification (livestock raising), etc. In other words, the current NFC specifications fail to fully cover all of RFID industry applications, leading to shortcomings of NFC applications. At the same time, NFC cellular phones, NFC protective cases and NFC audio headset jacks on the current market are set primarily by default to a card-reader mode, and if they want to work in the card mode, their switching methods are comparatively complex. The majority of users cannot carry out such setup on their own, and only professionals or professional firms have the ability to set the NFC functionality to the card mode, greatly limiting the rapid expansion of NFC applications.

### Content of the Invention

One of the technical problems to be solved by the present invention is to provide a type of integrated system and application method for dual-frequency multi-protocol multifunctional near field communication. This integrated system overcomes the shortcomings of conventional NFC applications, and covers the frequency range of RFID applications. This method extends NFC application functions in order to facilitate switching between the card-reader mode and the card mode, greatly improving quality of experience with NFC application functions.

In order to solve the above-mentioned problems, a dual-frequency multi-protocol multifunctional near field communication integrated system of the present invention includes a high-frequency NFC card-reader chip and a first inductive antenna. Said first inductive antenna connects to a signal transmitting/receiving terminal of said high-frequency NFC card-reader chip. This system also includes an ARM main-control chip, a Bluetooth module, a dual-interface smart-card chip, a second inductive antenna, a low-frequency card-reader chip, a low-frequency card-emulation control module, an antenna switching module, and a third inductive antenna. Said ARM main-control chip is separately connected to said Bluetooth module, high-frequency NFC card-reader chip, dual-interface smart-card chip, low-frequency card-reader chip and low-frequency card-emulation control module. Said second inductive antenna connects to an inductive signal transmitting/receiving terminal of said dual-interface smart-card chip. Said third conductive antenna connects to a signal transmitting/receiving terminal of said antenna switching module. Said antenna switching module is separately connected to a radio-frequency transmitting terminal of said low-frequency card-reader chip, a radio-frequency receiving terminal of said low-frequency card-emulation control module and a radio-frequency control terminal of said ARM main-control chip.

Furthermore, said low-frequency card-reader chip and low-frequency card-emulation control module separately support the card-reader mode and the card mode through said antenna switching module.

The near field communication application method based on said integrated system for dual-frequency multi-protocol multifunctional near field communication includes the following steps:
Step one: The high-frequency NFC card-reader chip, through the first inductive antenna, reads, by direct induction, information of a high-frequency NFC tag, and the information of the high-frequency NFC tag is transmitted to a smart terminal under the control of the ARM main-control chip through the Bluetooth module;
Step two: The information of the high-frequency NFC tag at the smart terminal is transmitted to the ARM main-control chip through the Bluetooth module. The ARM main-control chip transmits the information of the high-frequency NFC tag to the dual-interface smart-card chip via an ISO7816 bus. By matching with the second inductive antenna, the dual-interface smart-card chip and the second inductive antenna are emulated into a high-frequency NFC tag, which is directly read by other high-frequency NFC devices;
Step three: The low-frequency card-reader chip, through the third inductive antenna, reads, by direct induction, information of a low-frequency tag, which is transmitted to the smart terminal under the control of the ARM main-control chip through the Bluetooth module;
Step four: With coordination of the low-frequency card-emulation control module, the ARM main-control chip, the antenna switching module, and the third inductive antenna, the energy received by the third inductive antenna from an external card reader is transmitted by the antenna switching module to the ARM main-control chip through the low-frequency card-emulation control module, and the ARM main-control chip saves card information from the external card reader. Afterwards, the ARM main-control chip transmits back, to the external card reader, card information stored in the internal storage device, by sending the card information to the third inductive antenna through the antenna switching module after passing through the low-frequency card-emulation control module, thereby achieving functions of emulating multiple types of low-frequency inductive cards and deploying low-frequency inductive cards under a variety of formats and protocols, which are read by low-frequency RFID readers.

Because an integrated system and an application method for dual-frequency multi-protocol multifunctional near field communication of the present invention use said technical scheme, which is: the first inductive antenna of the integrated system is connected to the signal transmitting/receiving terminal of the high-frequency NFC card-reader chip; the high-frequency NFC card-reader chip reads information of the high-frequency NFC tag, and the information of the high-frequency NFC tag is transmitted to the smart terminal by the ARM main-control chip through the Bluetooth module; the information of the high-frequency NFC tag at the smart terminal is transmitted to the ARM main-control chip through the Bluetooth module, is also transmitted to the dual-interface smart-card chip, and by matching with the second inductive antenna, is emulated into the high-frequency NFC tag, which is read by other NFC devices; information of the low-frequency tag is read by the low-frequency card-reader chip and the third inductive antenna and is transmitted to the smart terminal by the ARM main-control chip through the Bluetooth module; the low-frequency card-emulation control module, the ARM main-control chip and the third inductive antenna achieve functions of low-frequency inductive cards, deploying low-frequency cards under any format and protocol, which are read by low-frequency RFID readers. This integrated system can cover most of the existing and future high/low frequency RFID applications. This method extends the NFC applications to facilitate the switching between the card-reader mode and the card mode, improving quality of experience with NFC application functions. Of course, products that are based on the present invention do not necessarily need to simultaneously achieve all advantages as mentioned above.

### Description of Figures

Combining figures and specific embodiments, the following provides further detailed description for the present invention:
Figure 1 is a schematic diagram of an NFC cellular phone in card-reader mode reading an NFC inductive tag;
Figure 2 is a schematic diagram of an NFC cellular phone in card mode being read by an NFC reading device;
Figure 3 is a schematic diagram of two NFC devices carrying out peer-to-peer communications;
Figure 4 is a schematic diagram of an integrated system for dual-frequency multi-protocol multifunctional near field communication of the present invention.

### Specific Embodiments

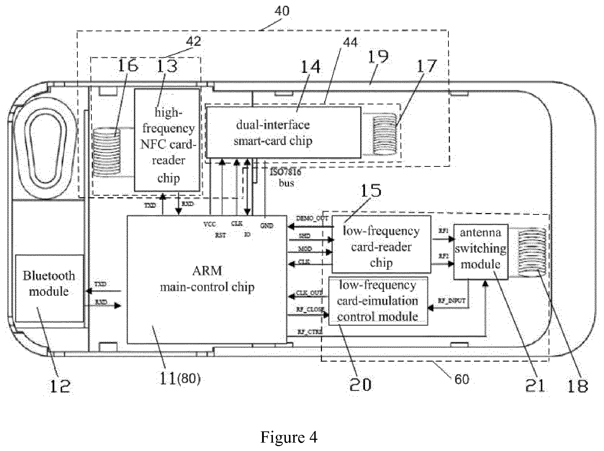

As shown in Figure 4, an integrated system for dual-frequency multi-protocol multifunctional near field communication of the present invention includes a high-frequency NFC card-reader chip 13 and a first inductive antenna 16. Said first inductive antenna 16 connects to a signal transmitting/receiving terminal of said high-frequency NFC card-reader chip 13. This integrated system also includes an ARM main-control chip 11, a Bluetooth module 12, a dual-interface smart-card chip 14, a second inductive antenna 17, a low-frequency card-reader chip 15, a low-frequency card-emulation control module 20, an antenna switching module 21, and a third inductive antenna 18. Said ARM main-control chip 11 is respectively connected with said Bluetooth module 12, high-frequency NFC card-reader chip 13, dual-interface smart-card chip 14, low-frequency card-reader chip 15, and low-frequency card-emulation control module 20. Said second inductive antenna 17 is connected to an inductive signal transmitting/receiving terminal of said dual-interface smart-card chip 14. Said third inductive antenna 18 is connected to a signal transmitting/receiving terminal of said antenna switching module 21. Said antenna switching module 21 is respectively connected with a radio-frequency transmitting terminal of said low-frequency card-reader chip 15, a radio-frequency receiving terminal of the low-frequency card-emulation control module 20, and a radio-frequency control terminal of the ARM main-control chip 11.

Furthermore, said low-frequency card-reader chip 15 and low-frequency card-emulation control module 20 each respectively support the card-reader mode and the card mode through said antenna switching module 21. In Figure 4, VCC represents electric power source, RST represents reset, CLK represents clock, IO represents data input and output, GND represents the ground, TXD represents transmission, RXD represents reception, DEMOD_OUT represents demodulated output, MOD represents modulation, SHD represents chip shutdown, RF1 represents first radio frequency driver, RF2 represents second radio frequency driver, CLK_OUT represents clock output, RF_CLOSE represents radio frequency field-strength shutdown, RF_CTRL represents radio frequency field-strength control, and RF_INPUT represents radio frequency input.

The near field communication application method based on said integrated system for dual-frequency multi-protocol multifunctional near field communication includes the following steps:
Step one: The high-frequency NFC card-reader chip, through the first inductive antenna, reads, by direct induction, information of a high-frequency NFC tag, and the information of the high-frequency NFC is transmitted to a smart terminal under the control of the ARM main-control chip through the Bluetooth module;
Step two: The information of the high-frequency NFC tag at the smart terminal is transmitted to the ARM main-control chip through the Bluetooth module. The ARM main-control chip transmits the information of the high-frequency NFC tag to the dual-interface smart-card chip via an ISO7816 bus. By matching with the second inductive antenna, the dual-interface smart-card chip and the second inductive antenna are emulated into a high-frequency NFC tag, which is directly read by other high-frequency NFC devices;
Step three: The low-frequency card-reader chip, through the third inductive antenna, reads, by direct induction, information of a low-frequency tag, which is transmitted to the smart terminal under the control of the ARM main-control chip through the Bluetooth module;
Step four: With coordination of the low-frequency card-emulation control module, the ARM main-control chip, the antenna switching module, and the third inductive antenna, through the antenna switching module, the energy received by the third inductive antenna from an external card reader is transmitted by the antenna switching module to the ARM main-control chip through the low-frequency card-emulation control module, and the ARM main-control chip saves card information from the external card reader. Afterwards, the ARM main-control chip transmits back, to the external card reader, card information stored in the internal storage device, by sending the card information to the third inductive antenna through the antenna switching module after passing through the low-frequency card-emulation control module, thereby achieving functions of emulating multiple types of low-frequency inductive cards, and deploying low-frequency inductive cards under a variety of formats and protocols, which are read by low-frequency RFID readers.

It is evident to a person skilled in this art, based on the information recorded above, that the application method of said integrated system for dual-frequency multi-protocol multifunctional near field communication is only the best embodiment for this application. In specific applications, said steps do not need to all be included, and they do not need to be carried out in the order listed above. Moreover, said ARM main-control chip can also be replaced by other processing devices, and said ISO7816 bus can be replaced by other buses.

This integrated system can be installed in various types of cellular phone protective cases 19, using a low-power Bluetooth module 12, transmitting NFC data that have been read to various types of smart terminals, such as iPhone and other smart phones, PC computers, tablets, etc. In particular, when it is integrated into the cellular phone protective case 19, its adapter section for the USB port of a cellular phone can be eliminated, thereby allowing dimensions of the protective case to be almost the same as those of the cellular phone, which a user can hold with very good feel, without any sense of being thick, long or heavy.

In an NFC reader portion, the integrated system is designed into two structures for 13.56 MHz (high-frequency) and 125 KHz / 134.2 KHz (low-frequency), wherein for the high-frequency NFC part, the card reader function and the card function are separate, each working independently. The card section adopts the dual-interface smart-card chip 14, which also includes a 13.56 MHz RF wireless radio frequency interface and an ISO7816 bus interface. The ARM main-control chip 11 can transmit data to the dual-interface smart-card chip through the ISO7816 bus interface, and through the inductive matching with the second inductive antenna 17, the function of a high-frequency NFC inductive card can be achieved, without any complicated card-emulation configuration process of an existing conventional high-frequency NFC card-reading chip. A typical application of such a design is that the user can read data from a 13.56 MHz high-frequency RFID original card (such as public transportation card etc.) through the high-frequency NFC card-reader chip 13. Next, through operation commands of a cellular phone app, data of the original card can be transmitted to the dual-interface smart-card chip 14 using the ISO7816 bus interface through the ARM main-control chip 11 via the Bluetooth module 12. In this way, the user can directly use the cellular phone protective case to replace the original card, making it more convenient to use. When going outside, the cellular phone protective case with the integrated system can be used directly to carry out functions of the original card, such as paying transportation cost etc. This application method is much simpler and much more practical than using the standard NFC card-emulation method, and the user also does not need to possess any specialized knowledge and capability, so long as being able to operate a cellular phone app.

In low-frequency (125 KHz / 134.2 KHz) RFID applications, this integrated system switches between the card reader function and the card-emulation function through the antenna switching module 21. If switched to the low-frequency card-reader chip 15, then the ARM main-control chip 11, the low-frequency card-reader chip 15 and the third inductive antenna 18 form a low-frequency card reader circuit. The low-frequency card reader circuit directly reads the 125 KH / 134.2 KHz low-frequency tag, and then transmits the information of the low-frequency tag to the smart terminal under the control of the ARM main-control chip 11 through the Bluetooth module 12. If the antenna switching module 21 is switched to the low-frequency card-emulation control module 20, then the ARM main-control chip 11, the low-frequency card-emulation control module 20 and the third inductive antenna 18 form a low-frequency emulated card circuit. The low-frequency emulated card section needs the ARM main-control chip 11 to control the antenna switching module 21 to operate in the card-emulation mode. The third inductive antenna 18, when entering a specific range of the electric field of an external card reader, generates the inductive energy and receives information from the external card reader. Through the antenna switching module 21 and the low-frequency card-emulation control module 20, the clock information and the data information from the external electrical field are sent to the ARM main-control chip 11. The ARM main-control chip 11, through data analysis and processing, transmits the card data or information stored at the internal memory to the low-frequency card-emulation control module 20. Finally, through transmission by the antenna switching module 21 and the third inductive antenna 18, the external card reader can receive the simulated card information. Through software processing, many types of different communication protocols and data regulations of RFID tags or cards can be simulated, and safer and more innovative low-frequency communication protocols and formats can be developed, creating new application markets.

As shown in the embodiment stated above, the dual-frequency multi-protocol multifunctional near field communication integrated system of the present invention actually includes a high-frequency device 40, a low-frequency device 60 and a processing device 80. Said processing device 80 may be said ARM main-control chip 11. Said high-frequency device 40 includes said high-frequency card-reader circuit 42 and said high-frequency card-emulation circuit 44. Said high-frequency card-reader circuit 42 is connected to said high-frequency card-emulation circuit 44 through said processing device 80. Said high-frequency card-reader circuit 42 may comprise a circuit that includes said high-frequency NFC card-reader chip 13 and said first inductive antenna 16. Said high-frequency card-emulation circuit 44 may comprise a circuit that includes said dual-interface smart-card chip 14 and said second inductive antenna 17. Said second inductive antenna 17 is connected to an inductive signal transmitting/receiving terminal of said dual-interface smart-card chip 14. Said low-frequency device 60 may comprise a circuit that includes said low-frequency card-reader chip 15, said low-frequency card-emulation control module 20, said antenna switching module 21, and said third inductive antenna 18. Said third inductive antenna 18 is connected to a signal transmitting/receiving terminal of said antenna switching module 21. Said antenna switching module 21 is respectively connected to a radio-frequency transmitting terminal of said low-frequency card-reader chip 15, a radio-frequency receiving terminal of the low-frequency card-emulation control module 20, and a radio-frequency control terminal of said processing device 80.

Furthermore, the dual-frequency multi-protocol multifunctional near field communication integrated system of the present invention may also include the Bluetooth module 12. Said processing device 80 is respectively connected to said Bluetooth module 12, the high-frequency NFC card-reader chip 13, the dual-interface smart-card chip 14, the low-frequency card-reader chip 15, and the low-frequency card-emulation control module 20. Said second inductive antenna 17 is connected to an inductive signal transmitting/receiving terminal of said dual-interface smart-card chip 14, said third inductive antenna 18 is connected to a signal transmitting/receiving terminal of said antenna switching module 21, and said antenna switching module 21 is respectively connected to a radio-frequency transmitting terminal of said low-frequency card-reader chip 15, a radio-frequency receiving terminal of the low-frequency card-emulation control module 20, and a radio-frequency control terminal of the processing device 80.

By using these integrated systems and application methods, deficiencies of an NFC reading device terminal can be overcome, especially the problem of Apple cellular phones and tablets not supporting NFC, allowing a wider range of users to define and write various types of NFC tag information for personalized applications. The various types of NFC tag information include information of smart posters, phone numbers, website addresses, smart business cards, SMS, WIFI connections, Bluetooth pairing etc. At the same time, using this application method, seamless compatibility with existing 13.56 MHz (high-frequency) RFID and 125 KHz / 134.2 KHz (low-frequency) RFID can be achieved. Under cooperation with various system providers, various types of RFID cards and tags used by current systems can be directly replaced, meeting the goal of dual-frequency multi-protocol multifunctional capability. By integrating this system into a protective case, every user of smart phone or smart tablet is allowed to "DIY" own various types of smart tags, allowing every user of smart terminal to be a true participant in a smart life. Such things as access control, attendance check, public transportation, campus all-in-one card, membership card, animal identification (livestock management), logistics, anti-counterfeiting and various standard NFC applications (including NFC cellular phone payment) are integrated very well into the platform of this integrated system, thereby expanding functions of NFC applications, greatly improving quality of experience with NFC application functions.

## Claims

1. A type of integrated system for dual-frequency multi-protocol multifunctional near field communication, including a high-frequency NFC card-reader chip (13) and a first inductive antenna (16), said first inductive antenna (16) being connected to a signal transmitting/receiving terminal of said high-frequency NFC card-reader chip (13), **characterized in that**: the integrated system also includes a processing device (80), a Bluetooth module (12), a dual-interface smart-card chip (14), a second inductive antenna (17), a low-frequency card-reader chip (15), a low-frequency card-emulation control module (20), an antenna switching module (21) and a third inductive antenna (18), said processing device (80) being respectively connected to said Bluetooth module (12), the high-frequency NFC card-reader chip (13), the dual-interface smart-card chip (14), the low-frequency card-reader chip (15) and the low-frequency card-emulation control module (20), said second inductive antenna (17) being connected to an inductive signal transmitting/receiving terminal of said dual-interface smart-card chip (14), said third inductive antenna (18) being connected to a signal transmitting/receiving terminal of said antenna switching module (21), said antenna switching module (21) being respectively connected to a radio-frequency transmitting terminal of said low-frequency card-reader chip (15), a radio-frequency receiving terminal of the low-frequency card-emulation control module (20), and a radio-frequency control terminal of the processing device (80).

2. The integrated system for dual-frequency multi-protocol multifunctional near field communication of claim 1, **characterized in that**: said low-frequency card-reader chip (15) and the low-frequency card-emulation control module (20) respectively support a card-reader mode and a card mode through said antenna switching module (21).

3. The integrated system for dual-frequency multi-protocol multifunctional near field communication of claim 1, **characterized in that**: said high frequency refers to 13.56 MHz, and said low frequency refers to 125 KHz or 134.2 KHz.

4. A near field communication application method of the integrated system for dual-frequency multi-protocol multifunctional near field communication of claim 1, 2 or 3, **characterized in that**, said method also including the following steps:
said high-frequency NFC card-reader chip (13), through the first inductive antenna (16), reading, by direct induction, information of a high-frequency NFC tag, the information of the high-frequency NFC tag being transmitted to a smart terminal under control of the processing device (80) through the Bluetooth module (12).

5. The near field communication application method of the integrated system for dual-frequency multi-protocol multifunctional near field communication of claim 4, **characterized in that**, said method also including the following steps:
the information of the high-frequency NFC tag at the smart terminal being transmitted to the processing device (80) through the Bluetooth module (12), the processing device (80) transmitting the information of the high-frequency NFC tag to the dual-interface smart-card chip (14) through a bus, through matching with the second inductive antenna (17), the dual-interface smart-card chip (14) and the second inductive antenna (17) being emulated into a high-frequency NFC tag, which is directly read by another high-frequency NFC device.

6. The near field communication application method of the integrated system for dual-frequency multi-protocol multifunctional near field communication of claim 5, **characterized in that**, said method also including the following steps:
the low-frequency card-reader chip (15), through the third inductive antenna (18), reading, by direct induction, information of a low-frequency tag, which is transmitted to the smart terminal under control of the processing device (80) through the Bluetooth module;
with coordination of the low-frequency card-emulation control module (20), the processing device (80), the antenna switching module (21) and the third inductive antenna (18), the energy received by the third inductive antenna (18) from an external card reader being transmitted by the antenna switching module (21) to the processing device (80) through the low-frequency card-emulation control module (20), the processing device (80) saving card information from the external card reader, afterwards, the processing device (80) transmitting back, to the external card reader, card information stored in an internal storage device by sending the card information to the third inductive antenna (18) through the antenna switching module (21) after passing through the low-frequency card-emulation control-module (20), thereby achieving functions of emulating multiple types of low-frequency inductive cards and deploying low-frequency inductive cards under a variety of formats and protocols, which are read by a low-frequency RFID reader.

7. A type of integrated system for dual-frequency multi-protocol multifunctional near field communication, including a high-frequency device (40), **characterized in that**: said integrated system also includes a low-frequency device (60) and a processing device (80), said high-frequency device (40) including a high-frequency card-reader circuit (42) and a high-frequency card-emulation circuit (44), said high-frequency card-reader circuit (42) being connected to said high-frequency card-emulation circuit (44) through said processing device (80), said low-frequency device (60) including a low-frequency card-reader chip (15), a low-frequency card-emulation control module (20), an antenna switching module (21) and a third inductive antenna (18), said third inductive antenna (18) being connected to a signal transmitting/receiving terminal of said antenna switching module (21), said antenna switching module (21) being respectively connected to a radio-frequency transmitting terminal of said low-frequency card-reader chip (15), a radio-frequency receiving terminal of the low-frequency card-emulation control module (20), and a radio-frequency control terminal of the processing device (80).

8. The integrated system for dual-frequency multi-protocol multifunctional near field communication of claim 7, **characterized in that**: said low-frequency card-reader chip (15) and the low-frequency card-emulation control module (20) respectively support a card-reader mode and a card mode through said antenna switching module (21).

9. The integrated system for dual-frequency multi-protocol multifunctional near field communication of claim 7, **characterized in that**: said integrated system also includes a Bluetooth module (12), said Bluetooth module (12) being connected to said processing device (80).

10. The integrated system for dual-frequency multi-protocol multifunctional near field communication of claim 7, **characterized in that**: said high-frequency card-reader circuit (42) includes a high-frequency NFC card-reader chip (13) and said first inductive antenna (16), said high-frequency card-emulation circuit (44) including a dual-interface smart-card chip (14) and a second inductive antenna (17), said second inductive antenna (17) being connected to an inductive signal transmitting/receiving terminal of said dual-interface smart-card chip (14), said high-frequency NFC card-reader chip (13), said dual-interface smart-card chip (14) and said second inductive antenna (17) being respectively connected to said processing device (80).
